# EUROPÄISCHE PATENTSCHRIFT

(11) **EP 0 425 868 B1**
(45) Veröffentlichungstag und Bekanntmachung des Hinweises auf die Patenterteilung: **27.07.1994**
(21) Anmeldenummer: 90119590.9
(22) Anmeldetag: 12.10.1990
(51) Int. Cl.: D01H 7/04, F16C 33/66

(54) **Lagerung für ein um eine aufrechte Achse mit hohen Geschwindigkeiten drehbares Teil**
Bearing for a component rotating at high speeds about a vertical axis
Palier pour un élément rotatif à vitesses élevées autour d'un axe vertical

(30) Priorität: 02.11.1989 DE 3936530
(43) Veröffentlichungstag der Anmeldung: 08.05.1991
(73) Patentinhaber: MASCHINENFABRIK RIETER AG, CH-8406 Winterthur (CH)
(72) Erfinder: Oehy, Peter, CH-8405 Winterthur (CH); Busch, Rainer, CH-8472 Seuzach (CH)

(56) Entgegenhaltungen:
- EP-A- 0 289 897
- CH-A- 383 232
- CH-A- 395 826
- DE-A- 2 934 623
- DE-A- 3 126 892
- DE-A- 3 315 644
- DE-A- 3 809 976
- US-A- 4 784 500

## Beschreibung

Die Erfindung betrifft eine Lagerung für ein um eine aufrechte Achse mit hohen Geschwindigkeiten drehbares Teil gemäß dem Oberbegriff des Patentanspruches 1.

Eine solche Lagerung ist aus der Praxis bekannt und wird z.B. für die Glocken einer Glockenspinn- oder Glockenzwirnmaschine angewendet. Auf Grund der aufrechten Anordnung der Drehachse des drehbaren Teiles, das bei dem oben genannten Anwendungsbeispiel eine Glocke der Glockenspinn- oder Glockenzwirnmaschine ist, neigt das Schmiermittel infolge der Schwerkraft dazu, nach unten abzufließen, wodurch die Gefahr entsteht, daß die Schmiermittelversorgung des Lagers gestört wird. Bei einer zu geringen Schmierung des Lagers kann sich die Lagerreibung so erhöhen, daß die gewünschten hohen Drehzahlen des drehbaren Teiles nicht aufrechterhalten oder überhaupt nicht erreicht werden können und eventuell übermäßig viel Wärme in dem Lager entsteht. Bei den Glocken einer Glockenspinn- oder Glockenzwirnmaschine wird die Fadenspannung durch die Lagerreibung beeinflußt. Eine übermäßig hohe Fadenspannung, die zum Fadenbruch führen kann, ist eine Folge einer zu hohen Lagerreibung, die wiederum durch eine unzureichende Schmierung des Lagers verursacht wird. Eine zu geringe Schmierung des Lagers mit der Folge einer zu hohen Fadenspannung ist ebenso zu vermeiden, wie eine ungleichmäßige Lagerschmierung, die unerwünschte Schwankungen in der Fadenspannung zur Folge hat. Aber auch zu viel Schmiermittel in dem Lager sollte vermieden werden, weil zu viel Schmiermittel die Lagerreibung und infolgedessen die Laufeigenschaften des drehbaren Teiles ebenfalls ungünstig beeinflußt. Eine ungleichmäßige Verteilung des Schmiermittels in der Lagerung kann auch die Gefahr von unerwünschten Leckverlusten erhöhen.

Die Aufgabe der Erfindung besteht darin, die gattungsgemäße Lagerung für ein um eine aufrechte Achse mit hohen Geschwindigkeiten drehbares Teil derart auszubilden, daß eine möglichst konstante Schmierung des Lagers ermöglicht wird, wobei der Schmiermittelfilm in dem Lager möglichst dünn ist und Leckverluste des Schmiermittels möglichst vermieden werden.

Die Aufgabe der Erfindung wird dadurch gelöst, daß das drehbare Teil auf seiner Außenseite mindestens einen sich im Durchmesser nach oben stetig erweiternden Oberflächenabschnitt aufweist, der an den Speicherraum grenzt und sich in axialer Richtung bis in die Nähe des Lagers erstreckt.

In Versuchen hat sich gezeigt, daß sich das Schmiermittel in der erfindungsgemäßen Lagerung entsprechend der gestellten Aufgabe verhält. Die Gründe für dieses Verhalten des Schmiermittels können nicht mit Bestimmtheit angegeben werden. Es wird jedoch vermutet, daß sich bei der Rotation des drehbaren Teiles in der erfindungsgemäßen Lagerung ein Schmiermittelkreislauf ausbildet, bei dem aus dem Lager infolge der Schwerkraft nach unten abfließendes Schmiermittel in das Lager dadurch zurückgeführt wird, daß es an dem sich erweiternden Oberflächenabschnitt des drehbaren Teiles nach oben steigt und in einen unmittelbar unterhalb des Lagers liegenden Bereich gelangt, aus dem es von dem Lager aufgenommen wird. Eine Erklärung für das Hochsteigen des Schmiermittels an dem Oberflächenabschnitt des drehbaren Teiles könnte darin bestehen, daß das Schmiermittel in der Nähe des Lagers, wo der Durchmesser des Oberflächenabschnittes am größten ist, durch Zentrifugalkräfte von der Oberfläche weggeschleudert wird und auf Grund von Kohäsionskräften neues Schmiermittel von unten nachgesaugt wird, um das weggeschleuderte Schmiermittel zu ersetzen. Möglicherweise erklärt sich das Hochsteigen des Schmiermittels an dem Oberflächenabschnitt des drehbaren Teiles auch dadurch, daß das Schmiermittel bestrebt ist, sich auf dem Umfang des Oberflächenabschnittes in einer zusammenhängenden Schicht zu verteilen, die mit größer werdendem Durchmesser des Oberflächenabschnittes immer dünner wird, so daß neues Schmiermittel von unten nachströmt, um die Schicht nicht zu unterbrechen, wobei ebenfalls Zentrifugal- und Kohäsionskräfte eine Rolle spielen dürften. Die Schmiermittelschicht in dem Lager der erfindungsgemäßen Lagerung hat vermutlich deshalb die gewünschte kleine Dicke, weil das rückgeführte Schmiermittel nicht direkt in das Lager eingespritzt, sondern von dem Lager langsam eingesaugt wird. Durch die Rückführung des aus dem Lager nach unten abfließenden Schmiermittels wieder zurück in das Lager wird vermieden, daß sich unterhalb des Lagers ein größerer Schmiermittelsumpf ausbildet, der die Ursache für Leckverluste sein könnte.

Vorteilhafte Weiterbildungen der Erfindung sind Gegenstand der Unteransprüche.

Die Merkmale des Patentanspruches 2 führen dazu, daß das durch die Schwerkraft bewirkte Abfließen des Schmiermittels gebremst und das an dem Oberflächenabschnitt des drehbaren Teiles nach oben gestiegene Schmiermittel in dem porösen Körper gespeichert wird, bevor es von dem Lager aufgenommen wird. Dadurch verkürzt sich der Weg des Schmiermittels in dem Kreislauf und es bildet sich unter dem Lager ein Schmiermittelvorrat aus, aus dem das Lager im gewünschten Maß mit Schmiermittel versorgt wird. Diese Brems- und Speicherwirkung kann auf besonders wirtschaftliche Art und Weise durch die Merkmale des Patentanspruches 3 erzielt werden.

Mit den Merkmalen des Patentanspruches 4 wird sichergestellt, daß das an dem Oberflächenabschnitt des drehbaren Teiles hochgestiegene Schmiermittel nicht unmittelbar in das Lager geschleudert wird, wo es infolgedessen zu einem Schmiermittelüberschuß kommen könnte, sondern unterhalb des Lagers zunächst gesammelt werden kann, um von dort bedarfsweise von dem Lager aufgenommen zu werden.

Die Merkmale des Patentanspruches 5 ermöglichen es, den sich im Durchmesser nach oben erweiternden Oberflächenabschnitt herstellungstechnisch einfach und kostengünstig zu verwirklichen.

Mit den Merkmalen des Patentanspruches 6 wird erreicht, das unterhalb des zweiten Lagers ein ähnlicher Schmiermittelkreislauf wie unter dem oberen Lager während des Betriebs ausgebildet wird, so daß auch das zweite Lager entsprechend der gestellten Aufgabe geschmiert wird. Außerdem sorgen die Merkmale des Patentanspruches 6 dafür, daß sich das Schmiermittel sowohl während der Rotation des drehbaren Teiles als auch während seines Stillstandes nur geringfügig unter das zweite Lager absenken kann und insbesondere in Stillstandszeiten Leckverluste unter dem zweiten Lager vermieden werden.

Mit den Merkmalen des Patentanspruches 7 werden ähnliche Vorteile wie mit den Merkmalen des Patentanspruches 5 erzielt.

Die Merkmale des Patentanspruches 8 stellen eine Alternative zu der Verwendung einer Hülse für die Ausbildung der im Durchmesser sich nach oben erweiternden Oberflächenabschnitte dar.

Gemäß Patentanspruch 9 trägt das oder jedes Lager eine Fettschicht, denn es hat sich in Versuchen gezeigt, daß Fett ein hervorragendes Transportmittel für das Schmiermittel ist, das in das Lager zurückgeführt werden soll. Die Fettschicht fördert somit den Rückstrom des Schmiermittels in das Lager und beschleunigt seine Verteilung in dem Lager.

Der Gegenstand des Patentanspruches 10 ist die Anwendung der erf indungsgemäßen Lagerung bei einer frei drehbaren Glocke einer Glockenspinn- oder Glockenzwirnvorrichtung. Gerade bei dieser Art von drehbaren Teilen trägt die erfindungsgemäße Lagerung dazu bei, daß die Drehzahlen der Glocke in Bereiche angehoben werden kann, in denen das Glockenspinnen anderen Spinnverfahren gegenüber zumindest gleichwertig wird oder sie sogar übertrifft, wobei eine zu hohe oder ungleichmäßige Lagerreibung, welche die Fadenspannung direkt beeinflußt, vermieden wird.

Ein wesentlicher Vorteil der erfindungsgemäßen Lagerung besteht darin, daß die Wartungsabstände für die Schmierung der Lager sehr groß gemacht werden können.

Ein Ausführungsbeispiel der Erfindung ist in den Zeichnungen dargestellt und wird im folgenden näher beschrieben. Es zeigt:
- Figur 1: eine schematische Schnittdarstellung der erfindungsgemäßen Lagerung für die Glocke einer Glockenspinn- oder Glockenzwirnvorrichtung,
- Figur 2a: schematisch die Anordnung der erfindinngsgemäßen Lagerung bei einem ersten Glockentyp und
- Figur 2b: schematisch die Anordnung der erf indungsgemäßen Lagerung bei einem anderen Glockentyp.

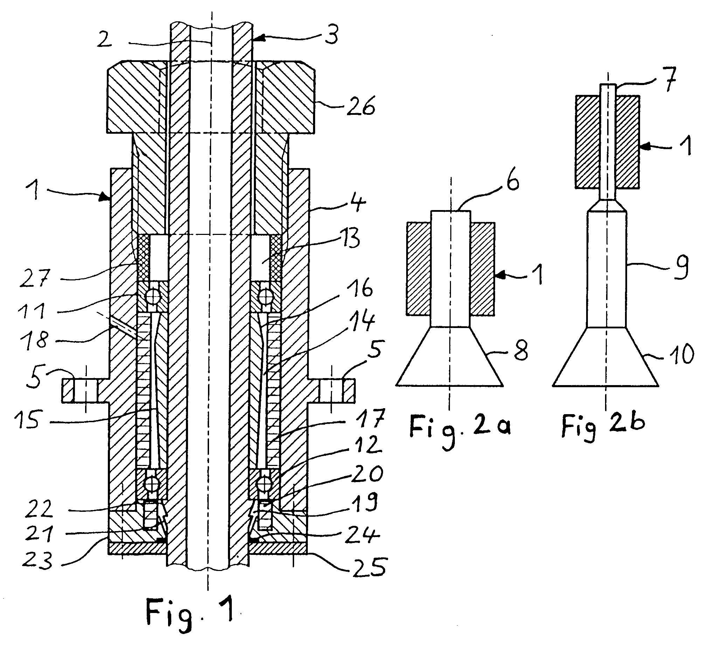

Wie aus Figur 1 ersichtlich ist, weist die erfindungsgemäße Lagerung 1 für ein um eine vertikale Achse 2 drehbares Teil 3 ein das Teil 3 koaxial umgebendes Gehäuse 4 auf, das an einem nicht dargestellten Teil einer Glockenspinn- oder Glockenzwirnmaschine mittels nicht dargestellter Schrauben an den dafür vorgesehenen Stellen 5 befestigt werden kann. Das drehbare Teil 3 ist entweder der hohlzylindrische Teil 6 des in Figur 2a dargestellten Glockentyps oder der Wellenstumpf 7 des in Figur 2b dargestellten Glockentyps.

Bei dem in Figur 2a dargestellten Glockentyp schließt sich an den hohlzylindrischen Teil 6 nach unten ein konischer hohler Teil 8 an. Die Lagerung 1 des in Figur 2a dargestellten Glockentyps befindet sich an dem hohlzylindrischen Teil 6.

Bei dem in Figur 2b dargestellten Glockentyp geht ein hohlzylindrischer Teil 9 nach oben in den Wellenstumpf 7 über, der einen kleineren Durchmesser als der hohlzylindrische Teil 9 hat, und nach unten schließt sich ein konischer hohler Teil 10 an den hohlzylindrischen Teil 9 an. Die Lagerung 1 befindet sich an dem Wellenstumpf 7 des in Figur 2b dargestellten Glockentyps.

In beiden Fällen ist die Glocke frei drehbar, d.h. daß sie nicht motorisch angetrieben wird, sondern von dem Faden, der auf den nicht dargestellten Kops aufgewunden wird, mitgeschleppt wird.

Aus Figur 1 ist ferner ersichtlich, daß das drehbare Teil 3 über zwei im axialen Abstand angeordnete Lager 11, 12 an dem Gehäuse 4 drehbar abgestützt ist. Die Lager 11, 12 sind in einem Ringraum 13 angeordnet, der sich zwischen dem drehbaren Teil 3 und dem Gehäuse 4 befindet. Zwischen den beiden Lagern 11 und 12 befindet sich ein Speicherraum 14 der einen Teil des Ringraumes 13 bildet. Der Speicherraum 14 dient zur Aufnahme von flüssigem Schmiermittel, wie weiter unten näher erläutert ist. Beide Lager tragen eine Fettschicht.

Der Speicherraum 14 wird an seinem radial inneren Ende von einem sich im Durchmesser nach oben konisch erweiternden Oberflächenabschnitt 15 begrenzt, der auf der Außenseite des drehbaren Teiles 3 gebildet ist. Der konische Oberflächenabschnitt 15 grenzt mit seinem im Durchmesser kleineren Ende an das untere Lager 12 und hat seinen größten Durchmesser an einer Stelle, die unterhalb des oberen Lagers 11 liegt und einen Abstand von dem oberen Lager 11 hat. An dieser Stelle geht der Oberflächenabschnitt 15 in einen sich im Durchmesser nach oben konisch verringernden Oberflächenabschnitt 16 über, der mit seinem im Durchmesser kleineren Ende an das obere Lager 11 grenzt.

Die Oberflächenabschnitte 15 und 16 werden durch die Außenfläche einer Hülse gebildet, die an der zylindrischen Außenfläche eines Kerns des drehbaren Teiles 3 befestigt ist, wobei der Kern und die Hülse zusammen das drehbare Teil darstellen.

Der Speicherraum 14 weist einen porösen Körper 17 auf, der zwischen dem Gehäuse 4 und den Oberflächenabschnitten 15 und 16 des drehbaren Teiles 3 angeordnet ist, wobei zwischen der Innenseite des porösen Körpers 17 und den Oberflächenabschnitten 15 und 16 ein Abstand verbleibt. Der poröse Körper 17 wird durch eine Hülse aus Schaumstoff gebildet, die mit ihrer Außenfläche an der Innenfläche des Gehäuses 4 anliegt.

Im Betrieb ist der hülsenförmige Schaumstoffkörper 17 mit Schmiermittel getränkt, das zur Schmierung der beiden Lager 11 und 12 verwendet wird.

Eine schräg nach unten verlaufende Bohrung 18 ist in der Wandung des Gehäuses 4 vorgesehen und mündet mit ihrem inneren Ende in den Speicherraum 14. Durch die Bohrung 18 kann Schmiermittel in den Speicherraum 14 bei Bedarf nachgefüllt werden.

Unterhalb des unteren Lagers 12 ist ein weiterer Speicherraum 19 vorgesehen, der ein Teil des Ringraumes 13 ist und ebenfalls zur Aufnahme von Schmiermittel dient. Auch der Speicherraum 19 weist einen porösen Körper 20 auf, der wie der Körper 17 aus einer Hülse aus Schaumstoff besteht. Der Speicherraum 19 wird an seinem inneren Ende von zwei aufeinanderfolgenden, sich im Durchmesser nach oben konisch erweiternden Oberflächenabschnitten 21, 22 begrenzt, die durch einen sich radial erstreckenden Flächenabschnitt miteinander verbunden werden, wobei sich der obere konische Oberflächenabschnitt 22 bis zu dem unteren Lager 12 erstreckt. Die Oberflächenabschnitte 21 und 22 haben einen radialen Abstand von der Innenfläche des porösen Körpers 20.

Der Ringraum 13 wird an seinem unteren Ende durch einen Deckel 23 geschlossen, der durch eine ringförmige Scheibe 24 mit Hilfe von nicht dargestellten Schrauben an das untere Ende des Gehäuses 4 geklemmt wird. Der Deckel 23 hat eine ringförmige Ausnehmung, in welcher der hülsenförmige Schaumstoffkörper 20 sitzt. Eine Ringschulter des Deckels 23 bildet eine Auflagefläche für den Außenring des unteren Lagers 12. Der Innenring des unteren Lagers 12 ruht auf einem sich radial erstreckenden Flächenabschnitt der sich an das obere Ende des Oberflächenabschnittes 22 anschließt.

Die Oberflächenabschnitte 21 und 22 sind auf der Außenseite des Kernes des drehbaren Teiles 3 gebildet.

Zwischen dem Deckel 23 und der ringförmigen Scheibe 24 ist ein Dichtungsring 25 angeordnet, der mit seiner radialen Innenfläche an der Außenseite des drehbaren Teiles 3 liegt.

Am oberen Ende wird der Ringraum 13 durch eine Schraube 26 geschlossen, die ein Außengewinde aufweist, das mit einem am oberen Ende des Gehäuses 4 gebildeten Innengewinde im Eingriff steht. Zwischen der Schraube 26 und dem oberen Lager 11 befindet sich in dem Ringraum 13 ein Federelement 27, das auf den axial verschiebbaren Außenring des oberen Lagers 11 drückt.

Wenn sich Schmiermittel, wie z.B. Öl, in den Speicherräumen 14 und 19 befindet und das drehbare Teil 3 mit hoher Geschwindigkeit rotiert, entsteht in den beiden Speicherräumen 14 und 19 jeweils ein Schmiermittelkreislauf, bei dem aus dem jeweiligen Lager 11 bzw. 12 infolge der Schwerkraft nach unten abfließendes Schmiermittel in das Lager zurückgeführt wird. Im Speicherraum 14 stellt man sich den Schmiermittelkreislauf so vor, daß das aus dem Lager 11 beispielsweise über den porösen Körper 17 nach unten abfließende Schmiermittel an dem Oberflächenabschnitt 15 nach oben steigt und an der Stelle des größten Durchmessers des Oberflächenabschnittes 15 in den Körper 17 geschleudert wird, der das weggeschleuderte Schmiermittel aufnimmt und unterhalb des Lagers 11 speichert. Das Lager 11 saugt das gespeicherte Schmiermittel wieder ein, wobei sich ein Gleichgewicht zwischen dem nach unten abfließenden Schmiermittel und dem eingesaugten Schmiermittel auf einem Niveau einstellt, das die gewünschte dünne Schmiermittelschicht in dem Lager 11 ergibt. Möglicherweise bewirkt auch der in dem Lager 11 entstehende Sog, daß das Schmiermittel in dem porösen Körper 17 nach oben kriecht und vom oberen Ende des porösen Körpers 17 aus in das Lager 11 wieder eintritt.

Die Oberflächenabschnitte 21 und 22 haben nicht nur die Funktion, das aus dem Lager 12 nach unten abfließende Schmiermittel wieder nach oben zu befördern, sondern sie dienen auch dazu, insbesondere im Stillstand des drehbaren Teiles 3, das Abfließen des Schmiermittels zu verhindern oder wenigstens zu erschweren. Besonders der zwischen den beiden Oberflächenabschnitten 21 und 22 befindliche sich in radialer Richtung erstreckende Flächenabschnitt übt eine Sperrwirkung auf das Schmiermittel im Stillstand des drehbaren Teiles aus. Auch in dem porösen Körper 20 kann Schmiermittel nach oben kriechen, wenn das Lager 12 Schmiermittel von unten aufnimmt.

Da das Schmiermittel immer wieder in die Lager 11 und 12 zurückgeführt wird, kann sich zumindest während der Rotation des drehbaren Teile kein größerer Schmiermittelsumpf ausbilden, der das Lecken von Schmiermittel begünstigen würde. Für den Fall, daß sich im Betrieb dennoch Schmiermittel unterhalb des Lagers 12 sammelt und nicht wieder nach oben steigt und insbesondere in den Stillstandszeiten, in denen sich die Schmiermittelkreisäufe nicht ausbilden können, sorgt dann die Dichtung 25 dafür, daß das Schmiermittel aus dem Speicherraum 19 nicht auslaufen kann.

Das Fett in und an den Lagern 11, 12 fördert den Übertritt des Schmiermittels von den porösen Körpern 17, 20 in die Lager und dessen Verteilung in den Lagern, denn das Fett übt eine Transportwirkung auf das Schmiermittel aus.

## Patentansprüche

1. Lagerung für ein um eine aufrechte Achse (2) mit hohen Geschwindigkeiten drehbares Teil (3), mit einem das Teil umgebenden Gehäuse (4), mindestens einem im Gehäuse um das Teil herum angeordneten Lager (11), welches das Teil am Gehäuse drehbar abstützt, und einer Einrichtung zur Schmierung des Lagers mit flüssigem Schmiermittel, wobei die Einrichtung mindestens einen zwischen dem Gehäuse (4) und dem Teil angeordneten Speicherraum (14) zur Aufnahme von Schmiermittel aufweist und der Speicherraum unter dem Lager (11) angeordnet ist, dadurch **gekennzeichnet,** daß das drehbare Teil (3) auf seiner Außenseite mindestens einen sich im Durchmesser nach oben stetig erweiternden Oberflächenabschnitt (15) aufweist, der an den Speicherraum (14) grenzt und sich in axialer Richtung bis in die Nähe des Lagers (11) erstreckt.

2. Lagerung nach Anspruch 1, dadurch gekennzeichnet, daß der Speicherraum (14) einen porösen Körper (17) aufweist, der zwischen dem Gehäuse (4) und dem Oberflächenabschnitt (15) des Teiles (3) angeordnet ist.

3. Lagerung nach Anspruch 2, dadurch gekennzeichnet, daß der poröse Körper (17) eine Hülse aus Schaumstoff ist, die den Oberflächenabschnitt (15) koaxial umgibt, wobei die Innenfläche der Hülse einen radialen Abstand von dem Oberflächenabschnitt (15) hat.

4. Lagerung nach einem der Ansprüche 1 bis 3, dadurch gekennzeichnet, daß der Oberflächenabschnitt (15) seinen größten Durchmesser an einer Stelle hat, die einen axialen Abstand von dem über ihr angeordneten Lager (11) aufweist.

5. Lagerung nach einem der Ansprüche 1 bis 4, dadurch gekennzeichnet, daß der Oberflächenabschnitt (15) auf der Außenseite einer Hülse gebildet ist, die koaxial auf einem Kern des drehbaren Teiles (3) angeordnet und mit dem Kern drehfest verbunden ist.

6. Lagerung nach einem der Ansprüche 1 bis 5, wobei ein zweites Lager unter dem erstgenannten Lager vorgesehen ist und einen axialen Abstand von dem erstgenannten Lager hat, und sich der erstgenannte Speicherraum zwischen den beiden Lagern erstreckt, dadurch **gekennzeichnet,** daß unter dem zweiten Lager (12) ein weiterer Speicherraum (19) vorgesehen ist, der einen weiteren porösen Körper (20) aufweist, und das Teil (3) auf seiner Außenseite weitere sich im Durchmesser nach oben stetig erweiternde Oberflächenabschnitte (21, 22) aufweist, die an den weiteren Speicherraum (19) angrenzen und paarweise durch jeweils einen sich im wesentlichen radial erstreckenden Flächenabschnitt miteinander verbunden sind, wobei sich der oberste (22) der weiteren Oberflächenabschnitte (21, 22) axial bis zu dem zweiten Lager (12) erstreckt.

7. Lagerung nach Anspruch 6, dadurch gekennzeichnet, daß der weitere poröse Körper (20) ebenfalls eine Hülse aus Schaumstoff ist, welche die weiteren Oberflächenabschnitte (21, 22) koaxial umgibt und einen radialen Abstand von den weiteren Oberflächenabschnitten (21, 22) hat.

8. Lagerung nach Anspruch 6 oder Anspruch 7, dadurch gekennzeichnet, daß die weiteren Oberflächenabschnitte (21, 22) Bestandteil der Außenseite des Kerns des drehbaren Teiles (3) sind.

9. Lagerung nach einem der vorhergehenden Ansprüche, dadurch gekennzeichnet, daß das oder jedes Lager (11, 12) eine Fettschicht trägt.

10. Anwendung der Lagerung nach einem der vorhergehenden Ansprüche bei einer frei drehbaren Glocke (6, 8; 7, 9, 10) einer Glockenspinn- oder Glockenzwirnvorrichtung.

## Claims

1. A bearing for a part (3) rotatable about an upright axle (2) at high speed, with a casing (4) encompassing the part, at least one bearing (11) arranged in the casing around the part, which bearing rotatably supports the part on the casing, and a device for lubricating the bearing with a liquid lubricant, with the device being provided with at least one storage chamber (14) arranged between the casing (4) and the part for receiving the lubricant, and the storage chamber being arranged below the bearing (11), characterized in that the rotatable part (3) is provided on its outer side with at least one surface section (15) whose diameter expands upwardly continuously, which is adjacent to the storage chamber (14) and which extends in the axial direction up to the vicinity of the bearing (11).

2. A bearing as claimed in claim 1, characterized in that the storage chamber (14) is provided with a porous body (17) which is arranged between the casing (4) and the surface section (15).

3. A bearing as claimed in claim 2, characterized in that the porous body (17) is a tube made from foamed material which encompasses the surface section (15) coaxially, whereby the inner surface of the tube is provided with a radial distance from the surface section (15).

4. A bearing as claimed in one of the claims 1 to 3, characterized in that the surface section (15) has its largest diameter at a position which is provided with an axial distance to the bearing (11) arranged above it.

5. A bearing as claimed in one of the claims 1 to 4, characterized in that the surface section (15) is formed on the outer side of a tube which is coaxially arranged on a core of the rotatable part (3) and which is rotationally rigidly connected to the core.

6. A bearing as claimed in one of the claims 1 to 5, wherein a second bearing is provided below the said bearing and is provided with an axial distance from said bearing and the said storage chamber extends between the two bearings, characterized in that a further storage chamber (19) is provided below the second bearing (12) which is provided with a further porous body (20), and that the part (3) is provided on its outer side with further surface sections (21, 22) whose diameters expand upwardly continuously, which are adjacent to the further storage chamber (19) and are connected in pairs by surface sections extending substantially radially, whereby the uppermost (22) of the further surface sections (21, 22) extends axially up to the second bearing (12).

7. A bearing as claimed in claim 6, characterized in that the further porous body (20) is also a tube made from foamed material which coaxially encompasses the further surface sections (21, 22) and is provided with a radial distance from the further surface sections (21, 22).

8. A bearing as claimed in claim 6 or claim 7, characterized in that the further surface sections (21, 22) are a component of the outer side of the core of the rotatable part (3).

9. A bearing as claimed in one of the previous claims, characterized in that the bearing or each bearing (11, 12) carries a grease layer.

10. An application of the bearing as claimed in one of the previous claims in a freely rotatable cap (6, 8; 7, 9, 10) of a cap spinning or cap twisting apparatus.

## Revendications

1. Logement pour une partie (3), rotative à hautes vitesses, tournant autour d'un axe (2) debout, avec un carter (4) entourant la partie, au moins un palier (11) disposé dans le carter et entourant la partie, palier qui supporte la partie d'une manière rotative dans le carter, et un arrangement servant à la lubrification du palier par un moyen lubrifiant liguide, et où l'arrangement possède au moins une chambre d'accumulation (14) servant à la réception du moyen lubrifiant qui est située entre le carter (4) et la partie, et la chambre d'accumulation est disposée sous le palier (11),
caractérisé par le fait que
la partie rotative (3) possède, sur sa face extérieure, au moins un segment de surface (15) dont le diamètre s'élargit vers le haut d'une manière continue, qui est contigu à la chambre d'accumulation (14) et s'étend dans le sens axial jusqu'aux alentours du palier (11).

2. Logement selon revendication 1,
caractérisé par le fait que
la chambre d'accumulation (14) possède un corps poreux (17) qui est disposé entre le carter (4) et le segment de surface (15) de la partie (3).

3. Logement selon revendication 2,
caractérisé par le fait que
le corps poreux (17) est constitué par une douille en matière alvéolaire qui entoure d'une manière coaxiale le segment de surface (15), et où la surface intérieure de la douille présente une distance radiale par rapport au segment de surface (15).

4. Logement selon l'une des revendications 1 à 3,
caractérisé par le fait que
le segment de surface (15) présente son diamètre le plus grand à un endroit qui possède une distance axiale par rapport au palier (11) situé au-dessus de cet endroit.

5. Logement selon l'une des revendications 1 à 4,
caractérisé par le fait que
le segment de surface (15) est formé par la face extérieure d'une douille qui est disposée d'une manière coaxiale sur un noyau de la partie rotative (3), et qui est reliée au noyau d'une manière résistante à la rotation.

6. Logement selon l'une des revendications 1 à 5, dans lequel un deuxième palier est prévu sous le palier cité en premier, situé à une distance axiale par rapport au palier cité en premier, et la chambre d'accumulation citée auparavant s'étend entre les deux paliers,
caractérisé par le fait
qu'une autre chambre d'accumulation (19), possédant un autre corps poreux (20), est prévue, et la partie (3) possède, sur sa face extérieure, d'autres segments de surface (21, 22), dont les diamètres s'élargissent vers le haut d'une manière continue, qui sont contigus à l'autre chambre d'accumulation (19), et sont reliés jumelés par un segment de surface s'étendant essentiellement radialement, et où le segment de surface supérieur (22) des autres segments de surface (21, 22) s'étend axialement jusque vers le deuxième palier (12).

7. Logement selon revendication 6,
caractérisé par le fait que
l'autre corps poreux (20) est également constitué par une douille en matière alvéolaire qui entoure d'une manière coaxiale les autres segments de surface (21, 22), et possède une distance radiale par rapport aux autres segments de surface (21, 22).

8. Logement selon revendication 6 ou revendication 7,
caractérisé par le fait que
les autres segments de surface (21, 22) font partie de la face extérieure du noyau de la partie rotative (3).

9. Logement selon l'une des revendications précédentes,
caractérisé par le fait que
le ou chaque palier (11, 12) porte une couche de graisse.

10. Utilisation du logement selon l'une des revendications prédédentes, pour une cloche (6, 8; 7, 9, 10) à rotation libre d'un dispositif de filage ou de retordage à cloches.
